# FASCICULE DE BREVET EUROPEEN

(11) **EP 4 511 261 B1**
(45) Date de publication et mention de la délivrance du brevet: **01.04.2026**
(21) Numéro de dépôt: 23709257.2
(22) Date de dépôt: 16.02.2023
(51) Int. Cl.: B60R 16/02, B62D 21/15

(54) **SUPPORT D'UN ORGANE ASSURANT UNE PROTECTION DE SON ENVIRONNEMENT**
HALTERUNG FÜR EIN GLIED MIT SCHUTZ VOR SEINER UMGEBUNG
SUPPORT FOR A MEMBER, PROVIDING PROTECTION FROM ITS SURROUNDINGS

(30) Priorité: 22.04.2022 FR 2203756
(43) Date de publication de la demande: 26.02.2025
(73) Titulaire: Stellantis Auto SAS, 78300 Poissy (FR)
(72) Inventeur: JEUNE, Christelle, 25260 Montenois (FR)
(74) Mandataire: PSIP
(86) Numéro de dépôt international: PCT/FR2023/050215
(87) Numéro de publication internationale: WO 2023/203286

(56) Documents cités:
- FR-A1- 3 082 453
- FR-A1- 3 084 033
- US-A1- 2014 319 857
- US-A1- 2017 326 954
- US-A1- 2019 161 032
- ANONYMOUS: "Meccano parts 1973", 8 October 2015 (2015-10-08), pages 1 - 3, XP093007459, Retrieved from the Internet <URL:http://alansmeccano.org/models/Meccanoparts.html> [retrieved on 20221213]

## Description

### Domaine technique de l'invention

La présente invention concerne un support d'au moins un organe, le support assurant une protection de son environnement au cas où le support effectue un déplacement non souhaité et heurte un élément présent dans son environnement.

La présente invention concerne aussi un ensemble du support d'organe et d'un élément se trouvant dans l'environnement du support.

### Art antérieur

Dans ce qui va suivre il va être pris comme support d'au moins un organe un support de câble de frein dans un véhicule automobile et comme élément se trouvant dans l'environnement du support un connecteur ou faisceau d'un chargeur embarqué dans le véhicule automobile.

Il est à considérer que cet exemple n'est pas limitatif mais seulement illustratif et que la présente invention peut se rapporter à tout type de support pouvant entrer en contact non souhaité avec un élément se trouvant dans son environnement, notamment lors d'un choc sur le support le poussant vers l'élément.

De manière connue, un support de câble de frein est une pièce en tôle sur lequel sont fixés un ou des câbles de frein dirigés vers une rotule du train arrière d'un véhicule automobile.

Le support de câble de frein peut être fixé sur un longeronnet vers le côté gauche du véhicule, fréquemment en vis-à-vis d'un chargeur embarqué pour un véhicule automobile hybride ou électrique, ce chargeur illustrant un élément présent dans l'environnement du support de câble de frein. Ceci peut aussi être extrapolé pour tout moyen de transport électrique ou hybride.

Le support de câble de frein est localisé à proximité du chargeur embarqué et, lors d'un choc latéral sur le véhicule, par exemple contre un poteau, centré sur le chargeur, le support de câble de frein peut venir en collision contre le connecteur ou le faisceau du chargeur embarqué et l'endommager, notamment en le cisaillant au moins partiellement.

Ceci peut aussi être valable pour tout boîtier ou connecteur électrique se trouvant dans l'environnement du support de câble de frein afin d'éviter un court-circuit et un départ de feu dans le véhicule. Même des éléments non électriques peuvent être endommagés lors d'un déplacement non souhaité du support de câble de frein.

Ainsi, le risque de court-circuit électrique est important mais des risques d'endommagement d'éléments non électriques peuvent aussi être pris en considération dans l'environnement d'un tel support d'organe en entrant dans le cadre de la présente invention.

Par exemple, le document FR-B1-3 082 453 décrit un support de coupelle arrière de suspension avec un ajout d'un bord tombé permettant d'échapper au module de batterie lors d'un choc latéral. Il s'ensuit que les bords tombés positionnés sur des pièces de tôle permettent d'adoucir voire de supprimer les chocs agressifs entre deux pièces sont connus.

Cependant, dans ce document, le moyen de protection se trouve sur un support de coupelle qui est l'élément susceptible d'être endommagé et non l'élément endommageant. De plus, le moyen de protection se trouve à la base de la coupelle, ce qui ne permet pas une protection contre un contact dommageable plus haut sur la coupelle.

En outre, l'état de la technique est connu des documents US2017326954A1 et US2019161032A1.

Par conséquent, le problème à la base de l'invention est, pour un support d'au moins un organe, de garantir une protection d'un ou d'éléments se trouvant dans l'environnement du support lors d'un déplacement non souhaité du support, par exemple lors d'un choc, ce déplacement pouvant pousser le support contre l'élément ou les éléments se trouvant dans l'environnement du support.

### Résumé de l'invention

A cet effet, la présente invention concerne un support d'au moins un organe le traversant, le support présentant une forme de U avec deux branches s'étendant au moins partiellement parallèlement et une base, les branches et la base délimitant entre elles un espace de réception, caractérisé en ce qu'une première des deux branches présente un pliage transversal à la branche séparant sur la première branche pliée une première portion partant de la base et parallèle à la deuxième branche d'une seconde portion pliée prolongeant la première portion jusqu'à une extrémité distale de la première branche, et dans lequel au moins une arrête longitudinale de la seconde portion présente une surépaisseur arrondie.

L'effet technique est de permettre à la branche du support susceptible d'endommager au moins un élément se trouvant dans son environnement d'adopter une configuration moins dommageable pour cet élément lors d'un déplacement non souhaité du support. Un tel pliage se trouvant à une hauteur définie en relation avec la hauteur de l'élément à protéger permet d'éloigner de l'élément la seconde portion de la branche en vis-à-vis de l'élément, ce qui le protégera lors d'un possible déplacement non souhaité du support. Ceci est une caractéristique judicieuse étant donné que la seconde portion ne présentera alors plus d'arrête vive en vis-à-vis de l'élément à protéger.

Avantageusement, un angle de pliage entre les première et seconde portions est compris entre 30 et 120°. Un tel angle est sélectionné en accord avec l'élément à protéger et permet d'éloigner la seconde portion de la branche du support en vis-à-vis de l'élément ou que la seconde portion ne présente pas une arrête vive qui pourrait trancher cet élément dans l'environnement.

Avantageusement, la surépaisseur arrondie peut être plus ou moins molle ce qui atténuera un possible choc entre le support et l'élément.

Enfin, pour un élément électrique, la surépaisseur arrondie peut être non conductrice de l'électricité, ce qui est un avantage par rapport à un support en tôle qui lui sera conducteur lors d'un contact avec l'élément électrique.

Avantageusement, la surépaisseur arrondie est en matière plastique non conductrice de l'électricité.

Avantageusement, la base porte au moins un œilleton de fixation du support. Le support d'organe n'est pas destiné à bouger mais est fixe. Ce n'est que lors d'un choc violent que le support d'organe peut subir un déplacement non souhaité. L'œilleton de fixation assure le passage d'un élément de fixation entre le support et un organe de réception.

Avantageusement, les parties d'extrémité distale des deux branches sont recourbées à 90° par rapport au reste des branches.

L'invention concerne aussi un ensemble d'au moins un élément et d'un support d'au moins un organe, l'élément se trouvant dans un environnement du support et étant susceptible d'être endommagé par un déplacement non souhaité du support, caractérisé en ce que le support est tel que décrit précédemment, la première branche présentant le pliage étant en vis-à-vis de l'élément, le pliage de la première branche éloignant la seconde portion de l'élément.

La modification proposée par la présente invention a pour but de protéger un élément se trouvant dans l'environnement du support d'organe. Il s'ensuit que la première branche modifiée est celle qui se trouve en vis-à-vis de l'élément à protéger.

Avantageusement, quand la seconde portion de la première branche comporte une arrête longitudinale présentant une surépaisseur arrondie, ladite arrête longitudinale fait face à l'élément. Ceci permet d'atténuer le choc et d'éviter de cisailler l'élément lors d'un déplacement non souhaité du support.

Avantageusement, la hauteur du pliage sur la première branche est déterminée en fonction d'une hauteur de l'élément afin que la seconde portion de la première branche n'entre pas en collision avec l'élément lors d'un déplacement non souhaité du support.

C'est donc la hauteur de l'élément à protéger qui fixera la hauteur du pliage afin que le pliage ne soit ni trop haut, ni trop bas en comparaison avec la hauteur de l'élément à protéger.

Avantageusement, le support est un support de câble de frein dans un véhicule automobile hybride ou électrique et l'élément est un connecteur de chargeur embarqué ou un faisceau de chargeur embarqué dans le véhicule automobile.

Il est important que la branche en vis-à-vis de l'élément à protéger, notamment quand cet élément est un élément électrique, vienne au pire s'appuyer sur l'élément, par exemple un connecteur et son faisceau électrique au lieu d'avoir une arrête vive de la première branche du support en vis-à-vis de l'élément qui vienne le trancher.

Ceci permet de protéger l'élément, notamment un élément électrique d'une agression du support d'organe et d'éviter un court-circuit et un départ de feu.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig. 1] - la figure 1 est une vue schématique d'une vue en perspective d'un support d'organe
[Fig. 2] - la figure 2 est une vue schématique d'une vue en perspective d'un support d'organe sous un autre angle de vue que celle de la figure 1,

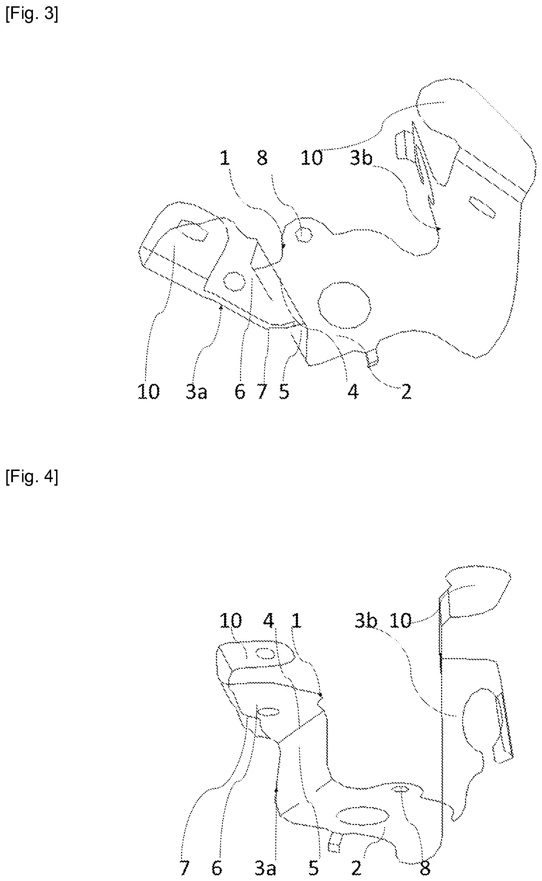

[Fig. 3] - la figure 3 est une vue schématique d'une vue en perspective d'un support d'organe conforme à une deuxième forme de réalisation de la présente invention en comportant une surépaisseur à une arrête longitudinale d'une branche destinée à être en vis-à-vis d'un élément de l'environnement du support à protéger,
[Fig. 4] - la figure 4 est une vue schématique d'une vue en perspective d'un support d'organe conforme à la deuxième forme de réalisation de la présente invention sous un autre angle de vue que celle de la figure 3.

### Description détaillée de l'invention

En se référant à toutes les figures, la présente invention concerne un support 1 d'au moins un organe le traversant, par exemple un support 1 d'organe longiforme comme un ou des câbles, par exemple un ou des câbles de frein, l'organe n'étant pas montré aux figures.

Le support 1 présente une forme de U avec deux branches 3a, 3b s'étendant au moins partiellement parallèlement et une base 2. Les branches 3a, 3b et la base 2 délimitent entre elles un espace de réception, dans lequel traversent la ou les organes que le support 1 loge partiellement.

Pour éviter que le support 1 ne présente un danger potentiel contre un ou des éléments, non montrés aux figures, se trouvant dans son environnement avec une première branche 3a du support 1 rentrant en contact avec le ou les éléments lors d'un déplacement non souhaité du support, une première 3a des deux branches 3a, 3b présente un pliage 4 transversal à la branche.

Ce pliage 4 ou ligne de pliage sépare la première branche 3a pliée en deux portions successives. Une première portion 5 part de la base 2 du support 1 et s'étend parallèlement à la deuxième branche 3b. Une seconde portion 6 pliée de la première branche 3a prolonge la première portion 5 jusqu'à une extrémité distale de la première branche 3a.

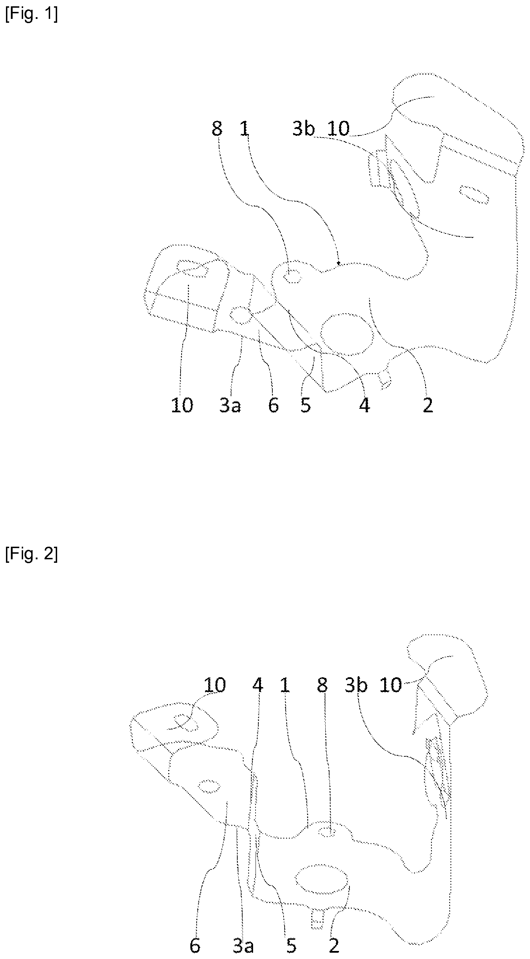

Ceci illustre la première forme de réalisation de la présente invention qui est montrée aux figures 1 et 2.

Cette seconde portion 6 a été recourbée pour ne pas heurter un élément environnant lors d'un déplacement non souhaité du support 1 d'organe qui est cependant, en conditions normales de fonctionnement, fixe.

En effet, la base 2 du support 1 d'organe peut porter au moins un œilleton 8 de fixation du support 1. D'autres points de fixation peuvent aussi être possibles.

Cet angle de pliage 4 entre les première 5 et seconde portions 6 peut être compris entre 30 et 120°. Il dépend du positionnement de l'élément à protéger par rapport au support 1 et de la taille de l'élément.

Selon invention, au moins une arrête longitudinale de la seconde portion 6 peut présenter une surépaisseur arrondie 7 tout en gardant les caractéristiques déjà énoncées pour la première forme de réalisation.

Ceci sera plus amplement expliqué ultérieurement en référence à un ensemble d'un support 1 d'organe et d'un élément à protéger se trouvant dans l'environnement du support 1 d'organe en prenant comme exemple non limitatif un support 1 de câble de frein et un connecteur ou faisceau de chargeur embarqué comme élément à protéger.

Comme il sera vu dans la suite, la surépaisseur arrondie 7 peut être en matière plastique non conductrice de l'électricité. Si la présente invention est particulièrement bien adaptée à la protection d'un élément électrique, elle peut cependant s'appliquer à la protection de tout élément mécanique dans l'environnement du support 1 de câble.

Les parties d'extrémité distale 10 des deux branches 3a, 3b peuvent être recourbées à 90° par rapport au reste des branches 3a, 3b. Le recourbement des parties d'extrémité distale 10 peut faire butée contre une sortie intempestive d'au moins un organe de se trouvant localement dans le support 1 d'organe.

L'invention concerne aussi un ensemble d'au moins un élément et d'un support 1 d'un organe, l'élément se trouvant dans un environnement du support 1 et étant susceptible d'être endommagé par un déplacement non souhaité du support 1. Selon la présente invention, le support 1 est tel que décrit précédemment, la première branche 3a présentant le pliage 4 étant en vis-à-vis de l'élément, le pliage 4 de la première branche 3a éloignant la seconde portion 6 de l'élément.

Quand la seconde portion 6 de la première branche 3a comporte une arrête longitudinale présentant une surépaisseur arrondie 7, conformément à la deuxième forme de réalisation de la présente invention, ladite arrête longitudinale fait face à l'élément. Cette surépaisseur arrondie 7 peut être en matière molle et aussi non conductrice de l'électricité dans le cas où l'élément à protéger est un élément électrique.

La hauteur du pliage 4 sur la première branche 3a peut être déterminée en fonction d'une hauteur de l'élément à protéger afin que la seconde portion 6 de la première branche 3a n'entre pas en collision avec l'élément lors d'un déplacement non souhaité du support 1.

Le support peut être un support 1 de câble de frein dans un véhicule automobile hybride ou électrique et l'élément peut être un connecteur de chargeur embarqué ou un faisceau de chargeur embarqué dans le véhicule automobile.

Une application préférentielle de la présente invention mais non limitative s'adresse à la protection d'un élément électrique tel qu'un faisceau de câbles électriques ou un connecteur.

La présente invention permet d'éviter les risques électriques et le sectionnement des faisceaux électriques en tant qu'élément se trouvant dans l'environnement du support 1 de câble. Ceci va être décrit en relation avec un chargeur embarqué comme élément à protéger, ce qui n'est pas limitatif.

Lors d'un choc latéral contre un poteau d'un véhicule hybride ou électrique dirigé vers le chargeur embarqué se trouvant sur le côté gauche du véhicule, le support 1 de câble de frein en tôle, donc conducteur, peut venir agresser un connecteur et/ou des faisceaux du chargeur embarqué en l'impactant d'une arête vive longitudinale d'une des branches 3a, 3b du support 1 d'organe.

Ceci est particulièrement à éviter. Dans une première forme de réalisation de la présente invention, c'est le pliage 4 de la première branche 3a en vis-à-vis du chargeur illustrant l'élément à protéger qui permet de le protéger.

Dans la deuxième forme de réalisation de la présente invention, le rebord arrondi ou surépaisseur arrondie 7 sur l'arrête de la deuxième portion faisant face au chargeur embarqué donne une continuité et une épaisseur à l'arête vive et supprime ou atténue fortement son agressivité, afin que ce rebord ou surépaisseur arrondie 7 vienne s'appuyer doucement du fait de l'élasticité du rebord arrondi sur des parties du chargeur embarqué en diminuant ainsi le risque de coupure du connecteur ou un dénudement du faisceau.

L'invention n'est nullement limitée aux modes de réalisation décrits et illustrés qui n'ont été donnés qu'à titre d'exemples.

## Revendications

1. Support (1) d'au moins un organe le traversant, le support (1) présentant une forme de U avec deux branches (3a, 3b) s'étendant au moins partiellement parallèlement et une base (2), les branches (3a, 3b) et la base (2) délimitant entre elles un espace de réception, **caractérisé en ce qu'**une première des deux branches (3a, 3b) présente un pliage (4) transversal à la branche séparant sur la première branche (3a) pliée une première portion (5) partant de la base (2) et parallèle à la deuxième branche (3b) d'une seconde portion (6) pliée prolongeant la première portion (5) jusqu'à une extrémité distale de la première branche (3a), et dans lequel au moins une arrête longitudinale de la seconde portion (6) présente une surépaisseur arrondie (7).

2. Support (1) selon la revendication précédente, dans lequel un angle de pliage (4) entre les première (5) et seconde portions (6) est compris entre 30 et 120°.

3. Support (1) selon la revendication 1 ou 2, dans lequel la surépaisseur arrondie (7) est en matière plastique non conductrice de l'électricité.

4. Support (1) selon l'une quelconque des revendications précédentes, dans lequel la base (2) porte au moins un œilleton (8) de fixation du support (1).

5. Support (1) selon l'une quelconque des revendications précédentes, dans lequel les parties d'extrémité distale (10) des deux branches (3a, 3b) sont recourbées à 90° par rapport au reste des branches (3a, 3b).

6. Ensemble d'au moins un élément et d'un support (1) d'au moins un organe, l'élément se trouvant dans un environnement du support (1) et étant susceptible d'être endommagé par un déplacement non souhaité du support (1), **caractérisé en ce que** le support (1) est selon l'une quelconque des revendications précédentes, la première branche (3a) présentant le pliage (4) étant en vis-à-vis de l'élément, le pliage (4) de la première branche (3a) éloignant la seconde portion (6) de l'élément.

7. Ensemble selon la revendication précédente, dans lequel, quand la seconde portion (6) de la première branche (3a) comporte une arrête longitudinale présentant une surépaisseur arrondie (7), ladite arrête longitudinale fait face à l'élément.

8. Ensemble selon l'une quelconque des deux revendications précédentes, dans lequel la hauteur du pliage (4) sur la première branche (3a) est déterminée en fonction d'une hauteur de l'élément afin que la seconde portion (6) de la première branche (3a) n'entre pas en collision avec l'élément lors d'un déplacement non souhaité du support (1).

9. Ensemble selon l'une quelconque des trois revendications précédentes, dans lequel le support est un support (1) de câble de frein dans un véhicule automobile hybride ou électrique et l'élément est un connecteur de chargeur embarqué ou un faisceau de chargeur embarqué dans le véhicule automobile.

## Patentansprüche

1. Träger (1) mindestens eines Durchsetzers, wobei der Träger (1) U-förmig mit zwei zumindest teilweise parallel verlaufenden Schenkeln (3a, 3b) und einer Basis (2) ausgebildet ist, wobei die Schenkel (3a, 3b) und die Basis (2) einen Aufnahmeraum zwischen sich begrenzen, **dadurch gekennzeichnet, dass** einer der beiden Schenkel (3a, 3b) eine quer zum Schenkel verlaufende Biegung (4) aufweist Trennt auf dem gefalteten ersten Schenkel (3a) einen ersten Abschnitt (5), der von der Basis (2) ausgeht und parallel zum zweiten Schenkel (3b) eines zweiten gefalteten Abschnitts (6) verläuft, der den ersten Abschnitt (5) bis zu einem distalen Ende des ersten Schenkels (3a) verlängert, und wobei mindestens eine Längskante des zweiten Abschnitts (6) eine abgerundete Dicke (7) aufweist.

2. Träger (1) nach dem vorhergehenden Anspruch, wobei ein Biegewinkel (4) zwischen dem ersten (5) und dem zweiten Abschnitt (6) zwischen 30 und 120° liegt.

3. Träger (1) nach Anspruch 1 oder 2, wobei die abgerundete Dicke (7) aus elektrisch nicht leitendem Kunststoff besteht.

4. Träger (1) nach einem der vorhergehenden Ansprüche, wobei die Basis (2) mindestens eine Öse (8) zur Befestigung des Trägers (1) trägt.

5. Träger (1) nach einem der vorhergehenden Ansprüche, bei dem die distalen Endabschnitte (10) der beiden Schenkel (3a, 3b) um 90° in Bezug auf den Rest der Schenkel (3a, 3b) gebogen sind.

6. Anordnung aus mindestens einem Element und einem Träger (1) mindestens eines Organs, wobei das Element in einer Umgebung des Trägers (1) liegt und durch eine unbeabsichtigte Bewegung des Trägers (1) beschädigt werden kann, **dadurch gekennzeichnet, dass** der Träger (1) nach einem der vorhergehenden Ansprüche ist, wobei der erste Schenkel (3a) die Biegung (4) gegenüber dem Element aufweist, Biegen (4) des ersten Schenkels (3a), der den zweiten Teil (6) des Elements entfernt.

7. Anordnung nach dem vorhergehenden Anspruch, wobei, wenn der zweite Abschnitt (6) des ersten Schenkels (3a) eine Längsarretierung mit einer abgerundeten Dicke (7) aufweist, die Längsarretierung dem Element zugewandt ist.

8. Anordnung nach einem der beiden vorhergehenden Ansprüche, bei der die Höhe der Biegung (4) auf dem ersten Schenkel (3a) in Abhängigkeit von einer Höhe des Elementes bestimmt wird, sodass der zweite Abschnitt (6) des ersten Schenkels (3a) bei einer unerwünschten Bewegung des Trägers (1) nicht mit dem Element kollidiert.

9. Anordnung nach einem der drei vorhergehenden Ansprüche, bei der der Träger ein Bremskabelträger (1) in einem Hybrid- oder Elektrofahrzeug ist und das Element ein eingebauter Ladestecker oder ein in das Kraftfahrzeug eingebauter Ladestrahl ist.

## Claims

1. Support (1) of at least one organ passing through it, support (1) having a U shape with two branches (3a, 3b) extending at least partially parallel and a base (2), branches (3a, 3b) and base (2) delimiting between them a reception area, **characterized by** the fact that one of the two branches (3a, 3b) has a folding (4) transverse to the branch separating on the first branch (3a) folded a first portion (5) from base (2) and parallel to the second branch (3b) of a second portion (6) folded extending the first portion (5) to a distal end of the first branch (3a), in which at least one longitudinal stop of the second portion (6) has a rounded overthickness (7).

2. Support (1) according to the previous claim, in which a bend angle (4) between the first (5) and second (6) portions is between 30 and 120°.

3. Support (1) according to claim 1 or 2, in which the rounded overthickness (7) is made of non-conductive plastic material of electricity.

4. Support (1) in accordance with any of the preceding claims, in which the base (2) carries at least one order (8) for fixing the support (1).

5. Support (1) according to any of the preceding claims, in which the distal end parts (10) of the two branches (3a, 3b) are curved 90° from the rest of the branches (3a, 3b).

6. A set of at least one element and one support (1) of at least one organ, the element in an environment of the medium (1) and likely to be damaged by an unwanted displacement of the medium (1), **characterized by** the fact that the support (1) is in accordance with any of the preceding claims, the first branch (3a) presenting the folding (4) being in relation to the element, folding (4) of the first branch (3a) moving the second portion (6) of the element.

7. Together according to the previous claim, in which, when the second portion (6) of the first branch (3a) has a longitudinal stop with a rounded overthickness (7), the longitudinal stop faces the element.

8. Together according to any of the two preceding claims, in which the height of the bend (4) on the first branch (3a) is determined by a height of the element so that the second portion (6) of the first branch (3a) does not collide with the element during an unwanted displacement of the support (1).

9. Set according to any of the three preceding claims, in which the support is a brake cable support (1) in a hybrid or electric motor vehicle and the element is an on-board charger connector or a charger beam embedded in the motor vehicle.
